# EUROPÄISCHE PATENTSCHRIFT

(11) **EP 2 602 078 B1**
(45) Veröffentlichungstag und Bekanntmachung des Hinweises auf die Patenterteilung: **03.09.2014**
(21) Anmeldenummer: 11192075.7
(22) Anmeldetag: 06.12.2011
(51) Int. Cl.: B28B 3/26, B30B 11/22, B29C 47/00, B29C 47/12, B29K 309/02

(54) **Mundstück**
Mouthpiece
Bec

(43) Veröffentlichungstag der Anmeldung: 12.06.2013
(73) Patentinhaber: HÄNDLE GmbH Maschinen und Anlagenbau, 75417 Mühlacker (DE)
(72) Erfinder: Rank, Horst, 88048 Friedrichshafen (DE)
(74) Vertreter: Riedel, Peter

(56) Entgegenhaltungen:
- CN-Y- 2 339 379
- DE-U- 1 911 455
- US-A- 1 725 959
- US-A- 3 811 659

## Beschreibung

Die Erfindung bezieht sich auf ein Mundstück nach dem Oberbegriff des Patentanspruches 1.

Solche Mundstücke werden üblicherweise in einem Kanal einer Strangpresse eingebaut, um Formlinge aus keramischen Massen, beispielsweise aus Ton oder dergleichen, mit Hohlräumen zu versehen. Die keramischen Massen werden dabei von einem Schneckenförderer und einem nachgeordnetem Presskopf in Richtung des Mundstückes gedrückt bzw. drallfrei ausgerichtet.

Aufgrund der Materialbeschaffenheit der Massen entstehen an den Bauteilen des Mundstückes erhebliche Reibungen, die zu Verschleiß führen.

Aus der EP 19850104917 ist ein Mundstück zu entnehmen, das in einer Strangpresse zur Formung von Hochlochziegeln eingebaut ist. Das Mundstück weist eine Vorsetzplatte auf, die zunächst die Aufgabe übernimmt eine zuverlässige Verbindung zwischen dem in dem Kanal der Strangpresse eingebauten Presskopf und der das Mundstück bildenden Bauteile herzustellen. Um die keramischen Massen verformen zu können, ist unmittelbar dem Presskopf nachgeordnet eine Kernhalteplatte vorgesehen, die an der Vorsetzplatte montiert ist. Die Kernhalteplatte weist eine Vielzahl von Längs- und Querstreben auf. Desweiteren soll durch die Kernhalteplatte eine Abstützung für die zur Formung der Hohlräume in den Formlingen notwendigen Kerne ermöglicht sein, so dass an der Kernhalteplatte die durch die Quer- und Längsstreben gebildeten Knotenpunkte dazu verwendet werden, um auf diesen die jeweilige Haltestange anzubringen, an deren freien Ende die Kerne befestigt sind. Die Haltestangen sind parallel zu der Pressrichtung der keramischen Masse ausgerichtet.

Durch die Außenkontur der Kerne und deren Abstände zueinander werden demnach die Strukturen bzw. Hohlräume in den Formlingen gebildet.

Derartige Mundstücke werden zwar seit Jahrzehnten erfolgreich eingesetzt, jedoch hat sich herausgestellt, dass die auf die Kernhalteplatte einwirkenden Kräfte durch das Durchpressen der keramischen Massen erheblich sind, so dass die Kernhalteplatte um diese Kräfte abzustützen und durch diese nicht verbogen oder beschädigt zu werden, eine Wandstärke aufzuweisen hat, durch die die vorhandenen Kräfte abgestützt sind. Aufgrund dieser Presskräfte an der Kernhalteplatte ist somit ein erheblicher Materialbedarf gegeben, so dass die Kernhalteplatte in der Herstellung kostenintensiv ist, denn solche Kernhalteplatten werden üblicherweise aus einem hochfesten, metallischen Werkstoff aus dem Vollen gefertigt.

Desweiteren ist zu berücksichtigen, dass die keramische Masse in ihrer Homogenität beim Durchdrücken durch die Kernhalteplatte nicht unnötig verschoben wird, um eine möglichst konstante und gleich große Menge von keramischer Masse und den Kernen zu erhalten.

Durch die Dokumente CN 2,339,379 Y, welches ein Mundstuck gemäß dem Oberbegriff des Anspruchs 1 offenbart, und US 1,725,959 A sowie DE 19 11 455 U sind Mundstücke bekannt geworden, die in einer Strangpresse zur Herstellung von mit Hohlräumen versehenen Formlingen hergestellt werden können. Dabei ist aus diesen Druckschriften ferner zu entnehmen, dass die Kernplatte bezogen auf die Pressrichtung um die Längs- oder Querachse gebogen oder um beide Achsen gewölbt sind.

Nachteiligerweise sind die an der Halteplatte angebrachten Haltestangen den Kräften, die von der keramischen Masse auf die Haltestangen und den an deren freien Ende angebrachten Kernen unmittelbar ausgesetzt, so dass die Kernhaltestangen oftmals in Schwingung geraten, wodurch die lageorientierte Position der Kerne aufgelöst ist. Dies führt jedoch zu erheblichen Ungenauigkeiten bei der Herstellung von Formlingen mit einer exakt vorgegebenen Innengeometrie, insbesondere für die Hohlräume der Formlinge.

Es ist daher Aufgabe der Erfindung, ein Mundstück mit einer Kernhalteplatte der eingangs genannten Gattung derart weiterzubilden, dass die auftretenden Presskräfte zuverlässig an der Kernhalteplatte abgestützt sind, und dass gleichzeitig die Herstellungskosten für die Kernhalteplatte aufgrund von Materialeinsparungen reduziert sind.

Diese Aufgabe wird erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Wenn die Kernhalteplatte in Richtung der Pressrichtung gebogen oder gewölbt ausgestaltet ist, können die von der Strangpresse erzeugten Presskräfte der keramischen Massen nach Art einer Staumauer optimal abgestützt werden, so dass die Fertigung der Kernhalteplatte kostenreduzierend erfolgen kann, da Material bzw. Werkstoff für die Kernhalteplatte eingespart wird. Die Wandstärke der Kernhalteplatte ist gegenüber den plan ausgestalteten Kernhalteplatten reduziert, denn aufgrund der gebogenen oder gewölbten Struktur der Kernhalteplatte können bei kleinerer Wandstärke gleich große Kräfte aufgenommen und abgestützt sein.

Die Kernhalteplatte kann dabei sowohl in Längs- als auch in Querrichtung gebogen oder in beide Richtungen als Gewölbe oder als Halbkugel mit gleichgroßen Krümmungsradien ausgestaltet sein.

Um die Menge von keramischen Massen zwischen den einzelnen Quer- und Längsstreben der Kernhalteplatte möglichst gleich groß aufzuteilen, sind die Durchtrittsöffnungen der Kernhalteplatte gleich groß zu bemessen, und zwar insbesondere dann, wenn diese gekrümmt ist.

In der Zeichnung ist ein erfindungsgemäßes Ausführungsbeispiel dargestellt, das nachfolgend näher erläutert ist. Im Einzelnen zeigt:
- Figur 1: ein in einem Kanal einer Strangpresse eingesetztes Mundstück, mit einer gebogenen Kernhalteplatte, an der eine Vielzahl von Haltestangen mit jeweils einem Kern zur Bildung von Hohlräumen in einer keramischen Masse zur Herstellung eines Hochlochziegels eingebaut ist, im Schnitt,
- Figur 2a: eine erste Alternative zur Ausgestaltung der Kernhalteplatte gemäß Figur 1 die in Querrichtung gebogen ist, in perspektivischer Ansicht,
- Figur 2b: eine zweite Alternative der Kernhalteplatte gemäß Figur 1, die in Längsrichtung gebogen ist, in perspektivischer Ansicht,
- Figur 2c: eine dritte Alternative der Kernhalteplatte gemäß Figur 1, die sowohl in Längs- als auch in Querrichtung mit identischen Krümmungsradien gewölbt ist, in perspektivischer Ansicht und
- Figur 3: die zweiteilige ausgestaltung der Haltestangen gemäß Figur 1 im Schnitt

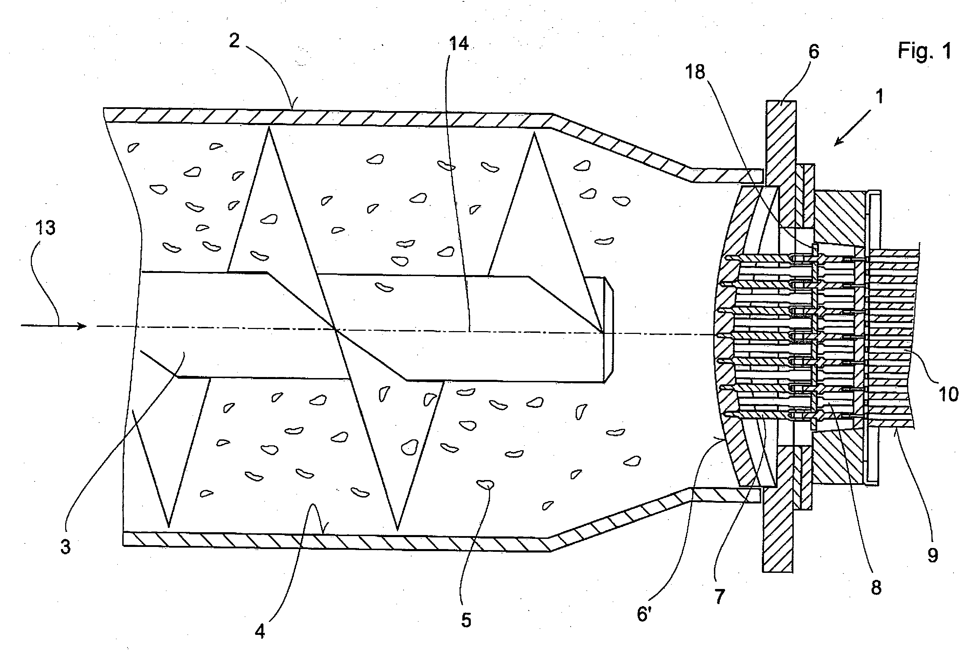

In Figur 1 ist ein Mundstück 1 zu entnehmen, das im Bereich einer Austrittsöffnung einer Strangpresse 2 angeordnet ist und durch das aus einer keramischen Masse 5 ein mit Hohlräumen 10 versehener Formling 9, beispielsweise ein Hochlochziegel, im Strangpressverfahren gefertigt ist. Um die Rotation und die Homogenität der keramischen Masse 5 nach dem Verlassen der Strangpresse 2 zu verbessern,, wird üblicherweise ein Presskopf eingebaut, der dem Mundstück 1 unmittelbar vorgelagert ist.

Die Strangpresse 2 besteht im Wesentlichen aus einem Schneckenförderer 3, der in einem geschlossenen Kanal 4 eingebaut ist und durch den die keramische Masse 5 in Richtung des Presskopfes und des Mundstückes 1 gefördert ist. Aufgrund der Materialeigenschaften der keramischen Masse 5, die aus den Werkstoffen Ton, Keramik oder dergleichen gebildet ist, entstehen an dem Mundstück 1 erhebliche Kräfte, beispielsweise durch Reibung. Darüber hinaus wird die keramische Masse 5 durch das Mundstück 1 in eine gewünschte und vorgegebene Struktur verformt, so dass hohe Druckkräfte abzustützen sind. Die Pressrichtung der keramischen Masse 5 ausgehend von dem Schneckenförderer 3 bis zu dem aus dem Mundstück 1 austretenden Formling 9 ist mit der Bezugsziffer 13 gekennzeichnet.

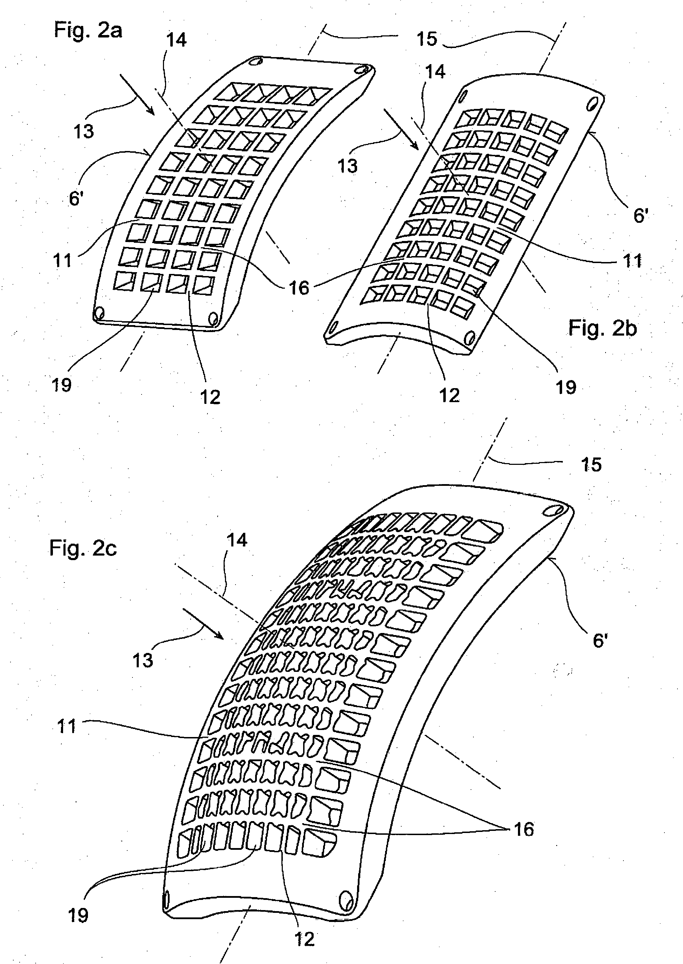

Das Mundstück 1 besteht aus einer Vorsetzplatte 6, die im Inneren des Kanals 4, vorzugsweise am Presskopf, fest mit diesem verbunden ist. Durch die Vorsetzplatte 6 ist eine gebogene oder gekrümmte Kernhalteplatte 6'abgestützt. Insbesondere aus den Figuren 2a, 2b und 2c ist zu entnehmen, dass die Kernhalteplatte 6' aus einer Vielzahl von Querstreben 11 und Längsstreben 12 gebildet ist, die senkrecht zueinander verlaufen. Die von den Querstreben 11 und den Längsstreben 12 gebildeten Knotenpunkte 16 dienen zur Befestigung von Haltestangen 7, die parallel zu der Pressrichtung 13 ausgerichtet sind. Die Haltestangen 7 können bedarfsweise an den Quer- oder Längsstreifen 11, 12 befestigt sein.

An dem freien Ende jeder Haltestange 7 ist ein Kern 8 angebracht, durch den der jeweilige Hohlraum 10 gebildet ist, denn die keramische Masse 4 wird mit Hilfe des Schneckenförderers 3 durch die von den Querstreben 11 und Längsstreben 12, also deren Durchtrittsfläche 19, und anschließend zwischen den Haltestangen 7 und den Kernen 8 gepresst, so dass der Formling 9 mit Hohlräumen 10 entsteht.

Um nunmehr die von dem Schneckenförderer 3 auf die keramische Masse 4 ausgeübten Kräfte optimal an der Kernhalteplatte 6' aufzunehmen, ist gemäß Figur 2a die Kernhalteplatte 6' um die Querachse15 gebogen. Die Querachse 15 verläuft dabei senkrecht zu der Längsachse 14, die parallel zu der Pressrichtung 13 angeordnet ist.

Gemäß Figur 2b ist die Kernhalteplatte 6' um die Längsachse 14 gebogen.

In Figur 2c ist gezeigt, dass die Kernhalteplatte 6' sowohl um die Längsachse 14 als auch um die Querachse 15 dom- bzw. halbkugelförmig ausgestaltet ist. Somit entsteht eine unterschiedliche oder gleichmäßige Wölbung der Kernhalteplatte 6' in der Längs- und Querachse 14 und 15.

Die jeweils gebogen oder gewölbt ausgestaltete Kernhalteplatte 6' der Figuren 2a, 2b und 2c ist dabei derart in den Kanal 4 der Strangpresse 2 einzubauen, dass die Krümmung oder Wölbung der Kernhalteplatte 6' in Richtung des Schneckenförderers 3 ausgerichtet ist. Die Kernhalteplatte 6' wirkt dabei nach Art eines Staudammes und aufgrund der gebogenen oder gewölbten Kontur der Kernhalteplatte 6' können bei geringerer Wandstärke der Längs- und Querstreben 11 und 12 gleich große Druck- und Reibkräfte ausgehalten bzw. aufgenommen sein als bei Kernhalteplatten die plan ausgestaltet sind.

Aus Figur 1 ist darüber hinaus ersichtlich, dass beabstandet zu der gebogenen oder gewölbten Kernhalteplatte 6' eine Arretierungsplatte 18 vorgesehen ist, die senkrecht zu der Pressrichtung 13 verläuft. Durch die Arretierungsplatte 18 werden die Haltestangen 7 miteinander verbunden, so dass diese zusätzlich abgestützt sind, um beispielsweise Schwingungen, die durch das Strömungsverhalten der keramischen Masse 5 entstehen können, zu verbinden, so dass die Kerne 8 positionsgenau in ihrer gewünschten Ausgangsstellung gehalten sind.

Die Gitterstruktur der Arretierungsplatte 18 entspricht dabei den geometrischen Abmessungen, die die Querstreben 11 und Längsstreben 12 der Kernhalteplatte 6' aufweisen. Folglich können die einzelnen von der Kernhalteplatte 6' voneinander getrennten Stränge von keramischen Massen 5 ungehindert durch die Öffnungen in der Arretierungsplatte 18 strömen. Die Arretierungsplatte 18 kann eben oder an die geometrische Kontur der Kernhalteplatte 6' angepasst sein.

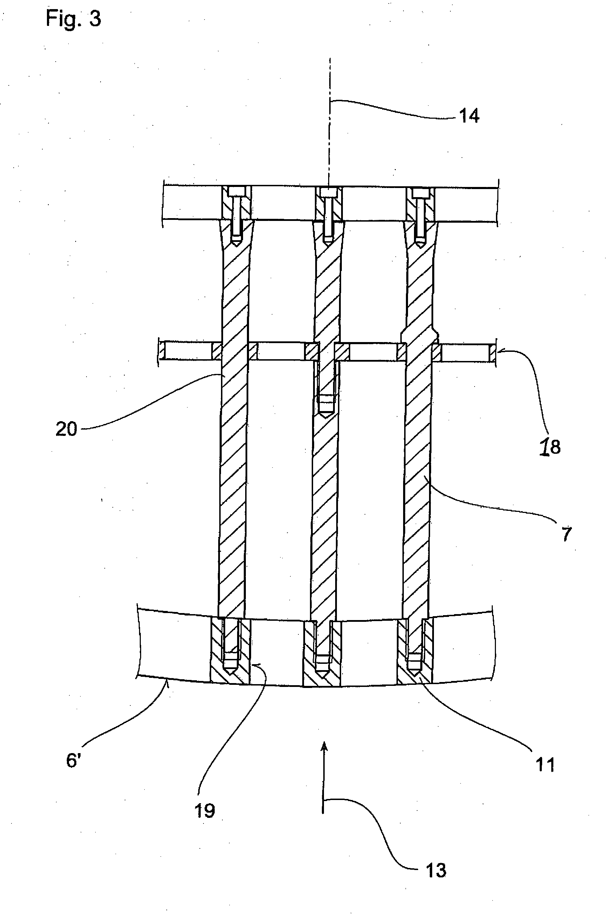

Aus Figur 3 ist die Befestigung der Haltestangen 7 mittels eines Gewindes 17 an den Knotenpunkt 16 der Kernhalteplatte 6' zu entnehmen. Es ist auch möglich, die Haltestange 7 anzuschweißen, anzukleben oder dergleichen.

Aufgrund der gebogenen oder gewölbten Ausbildung der Kernhalteplatte 6' weisen die einzelnen Haltestangen 7 möglicherweise im montierten Zustand unterschiedliche Längen auf, denn durch diese ist die Krümmung der Kernhalteplatte 6' auszugleichen, so dass die an der jeweiligen Haltestange 7 angebrachten Kerne 8 exakt in einer gemeinsamen planen Ebene positioniert sind.

Wenn zusätzlich zu der gebogenen oder gekrümmten Ausgestaltung der Kernhalteplatte 6' die Arretierungsplatte 18 an die Haltestangen 7 angebracht ist, entsteht ein Montageproblem, denn die Arretierungsplatte 18 kann nicht auf die Vielzahl der Haltestangen 7 aufgefädelt werden. Üblicherweise sind an Kernhalteplatten 6' bis zu 148 Haltestangen 7 zu befestigen.

Um dieses Problem zu lösen, sind die jeweiligen Haltestangen 7 aus zwei Teilen aufgebaut. Der erste Teil der Haltestangen 7 ist dabei an der Kernhalteplatte 6' angeschraubt und weist ein Außengewinde an der freien der Kernhalteplatte 6' abgewandten Stirnseite der Haltestangen 7 auf. Dies hat zudem den Vorteil, dass die Längen der einzelnen Haltestangen 7 bezogen auf die Krümmung bzw. Kontur der Kernhalteplatte 6' nach deren Befestigung auf die exakt gleiche Länge gekürzt werden können, so dass die ersten Teile der Haltestangen 7 in einer gemeinsamen Ebene verlaufen.

Anschließend wird die Arretierungsplatte 18 auf die ersten Teile der Haltestangen 7 aufgesetzt und beispielsweise mittels eines Gewindes 17 an den ersten Teil der jeweiligen Haltestangen 7 befestigt. Die die Arretierungsplatte 18 durchgreifenden freien Enden der ersten Teile der Haltestange 7 sind somit zugänglich für die Aufnahme des zweiten Teiles der Haltestangen 7, die ein Innengewinde aufweisen und auf den ersten Teil der Haltestangen 7 aufgeschraubt sind. Die Gewindeverbindung der ersten und zweiten Teile der Haltestangen 7 ist mit der Bezugsziffer 20 gekennzeichnet.

## Patentansprüche

1. Mundstück (1), das in einen Kanal (4) einer Strangpresse (2) zur Herstellung von mit Hohlräumen (10) versehenen Formlingen (9), insbesondere aus keramischen Massen (5), eingebaut werden kann, bestehend aus einer an dem Kanal (4) der Strangpresse (2) zu befestigende Vorsetzplatte (6), durch die eine das Mundstück (1) bildende Kernhalteplatte (6') bezogen auf die Pressrichtung (13) der Formlinge (9) von der Strangpresse (2) getrennt ist, und aus einer Vielzahl von auf der Kernhalteplatte (6') angebrachten Haltestangen (7), an denen jeweils ein Kern (8) aufgesetzt ist, durch die die Hohlräume (10) des Formlings (9) erzeugt sind, wobei die Kernhalteplatte (6') bezogen auf die Pressrichtung (13) um die Längs- oder die Querachse (14, 15) gebogen oder um beide Achsen (14, 15) gewölbt sind ,
**dadurch gekennzeichnet,**
**dass** an den Haltestangen (7) eine ebene Arretierungsplatte (18) oder eine Vielzahl von Verbindungsstangen angebracht ist, die vor der Kernhalteplatte (6') beabstandet und parallel zu dieser angeordnet ist bzw. sind und durch die die Haltestangen (7) in der vorgegebenen Position und Ausrichtung gehalten sind.

2. Mundstück nach Anspruch 1
**dadurch gekennzeichnet,**
**dass** die Kernhalteplatte (6') aus einer Vielzahl von Quer- und Längsstreben (11, 12) besteht, und dass die Durchtrittsfläche der gebogen oder gewölbt ausgestalteten Kernhalteplatte (6') zueinander gleichgroß bemessen sind.

3. Mundstück nach Anspruch 1 oder 2
**dadurch gekennzeichnet,**
**dass** die in Pressrichtung (13) verlaufende Wandstärke der Kernhalteplatte (6') in etwa gleich groß bemessen ist als die Breite der die Kerne (8) abstützenden Haltestangen (7).

4. Mundstück nach Anspruch 2
**dadurch gekennzeichnet,**
**dass** die Quer- und Längsstreben (11, 12) eine Vielzahl von Knotenpunkten (16) bilden und dass in den Knotenpunkten (16) der Kernhalteplatte (6') jeweils eine der Haltestangen (7) fest angebracht ist.

5. Mundstück nach Anspruch 4
**dadurch gekennzeichnet,**
**dass** die Haltestangen(7) an den Knotenpunkten (16) mittels einer Schweißnaht (17) oder einer Gewindeverbindung befestigt sind, und dass die Haltestangen (7) jeweils parallel zu der Pressrichtung (13) der Formlinge (9) ausgerichtet sind.

6. Mundstück nach Anspruch 1,
**dadurch gekennzeichnet,**
**dass** die Haltestangen (7) zweiteilig ausgebildet sind, dass die beiden Teile der Haltestangen (7) im Bereich der Zwischenplatte (18) oder der Verbindungsstangen mittels eines Gewindes fest miteinander verbunden sind.

7. Mundstück nach Anspruch 6,
**dadurch gekennzeichnet,**
**dass** die an der Kernhalteplatte (6') angebrachten ersten Teile der Haltestangen (7) in Abhängigkeit von der Krümmung der Kernhalteplatte (6') niveauidentisch verlaufen.

8. Mundstück nach einer der vorgenannten Ansprüche,
**dadurch gekennzeichnet,**
**dass** die Kernhalteplatte (6') halbkugelförmig gewölbt ausgestaltet ist.

9. Mundstück nach Anspruch 1,
**dadurch gekennzeichnet,**
**dass** die Arretierungsplatte (18) und die Kernhalteplatte (6') eine übereinstimmende Außenkontur aufweisen.

## Claims

1. Die (1) which can be installed into a channel (4) of an extruder (2) for the production of blanks (9) provided with cavities (10), in particular made of ceramic compounds (5), comprising a primary plate (6) which is to be secured to the channel (4) of the extruder (2) and by which a core retaining plate (6') forming the die (1) is separated from the extruder (2) in respect to the extruding direction (13) of the blanks (9), and further comprising a plurality of retaining bars (7) mounted on the core retaining plate (6'), to each of which is fitted a core (8) by which the cavities (10) of the blank (9) are produced, wherein the core retaining plate (6') is, in respect to the extruding direction (13), curved about the longitudinal axis or the transverse axis (14, 15) or domed about both axes (14, 15),
**characterised in that**
the retaining bars (7) are fitted with a flat locking plate (18) or with a plurality of connecting bars which are arranged at a distance in front of the core retaining plate (6') and parallel thereto and/or by which the retaining bars (7) are held in the predetermined position and orientation.

2. Die according to claim 1,
**characterised in that**
the core retaining plate (6') consists of a plurality of transverse and longitudinal struts (11, 12), and **in that** the passage areas of the curved or domed core retaining plate (6') are equal in size.

3. Die according to claim 1 or 2,
**characterised in that**
the wall thickness of the core retaining plate (6') in the extruding direction (13) is approximately the same as the width of the retaining bars (7) supporting the cores (8).

4. Die according to claim 2,
**characterised in that**
the transverse and longitudinal struts (11, 12) form a plurality of nodes (16), and **in that** one of the retaining bars (7) is permanently secured in each of the nodes (16) of the core retaining plate (6').

5. Die according to claim 4,
**characterised in that**
the retaining bars (7) are secured to the nodes (16) by means of a weld (17) or a threaded connection, and **in that** each retaining bar (7) is oriented parallel to the extruding direction (13) of the blanks (9).

6. Die according to claim 1,
**characterised in that**
the retaining bars (7) are designed in two parts, and **in that** the two parts of the retaining bars (7) are permanently joined to one another by means of a thread in the region of the backing plate (18) or the connecting bars.

7. Die according to claim 6,
**characterised in that**
the first parts of the retaining bars (7), which are mounted on the core retaining plate (6'), extend at identical levels as a function of the curvature of the core retaining plate (6').

8. Die according to any of the preceding claims,
**characterised in that**
the core retaining plate (6') has a hemispherical curvature.

9. Die according to claim 1,
**characterised in that**
the locking plate (18) and the core retaining plate (6') have a matching external contour.

## Revendications

1. Filière (1) qui peut être montée dans un conduit (4) d'une extrudeuse (2) pour la fabrication d'ébauches (9) pourvues de cavités (10), en particulier à partir de masses céramiques (5), composée d'une plaque avant (6) à fixer au conduit (4) de l'extrudeuse (2) et grâce à laquelle une plaque porte-noyaux (6') qui forme la filière (1) est séparée de l'extrudeuse (2) par rapport au sens d'extrusion (13) des ébauches (9), et d'une multiplicité de tiges de fixation (7), installées sur la plaque porte-noyaux (6'), sur lesquelles sont posés des noyaux respectifs (8) grâce auxquels sont produites les cavités (10) de l'ébauche (9), étant précisé que la plaque porte-noyaux (6') est courbée sur l'axe longitudinal ou l'axe transversal (14, 15) par rapport au sens d'extrusion (13), ou est bombée sur les deux axes (14, 15),
**caractérisée en ce qu'**il est prévu sur les tiges de fixation (7) une plaque d'arrêt plane (18) ou une multiplicité de tiges de liaison, qui est ou qui sont espacées de la plaque porte-noyaux (6') et qui sont disposées parallèlement à celle-ci, respectivement, et grâce auxquelles les tiges de fixation (7) sont maintenues dans la position et l'orientation prédéfinies.

2. Filière selon la revendication 1,
**caractérisée en ce que** la plaque porte-noyaux (6') se compose d'une multiplicité d'éléments transversaux et longitudinaux (11, 12) et **en ce que** les surfaces de passage de la plaque porte-noyaux (6') de forme courbée ou bombée ont toutes les mêmes dimensions.

3. Filière selon la revendication 1 ou 2,
**caractérisée en ce que** l'épaisseur de paroi, dans le sens d'extrusion (13), de la plaque porte-noyaux (6') est à peu près égale à la largeur des tiges de fixation (7) qui supportent les noyaux (8).

4. Filière selon la revendication 2,
**caractérisée en ce que** les éléments transversaux et longitudinaux (11, 12) forment une multiplicité de points de jonction (16) et **en ce que** les tiges de fixation (7) sont montées solidement dans les points de jonction respectifs (16) de la plaque porte-noyaux (6').

5. Filière selon la revendication 4,
**caractérisée en ce que** les tiges de fixation (7) sont fixées aux points de jonction (16) à l'aide d'une soudure (17) ou d'une liaison à vis, et **en ce que** les tiges de fixation (7) sont orientées chacune parallèlement au sens d'extrusion (13) des ébauches (9).

6. Filière selon la revendication 1,
**caractérisée en ce que** les tiges de fixation (7) sont en deux parties, **en ce que** les deux parties des tiges de fixation (7) sont reliées solidement entre elles dans la zone de la plaque intermédiaire (18) ou des tiges de liaison à l'aide d'un filetage.

7. Filière selon la revendication 6,
**caractérisée en ce que** les premières parties des tiges de fixation (7) qui sont installées sur la plaque porte-noyaux (6') s'étendent au même niveau en fonction de la courbure de la plaque porte-noyaux (6').

8. Filière selon l'une des revendications précédentes,
**caractérisée en ce que** la plaque porte-noyaux (6') a une forme bombée hémisphérique.

9. Filière selon la revendication 1,
**caractérisée en ce que** la plaque d'arrêt (18) et la plaque porte-noyaux (6') présentent un contour extérieur concordant.
